# EUROPEAN PATENT APPLICATION

(11) **EP 2 420 696 A2**
(43) Date of publication of application: **22.02.2012**
(21) Application number: 11177990.6
(22) Date of filing: 18.08.2011
(51) Int. Cl.: F16F 9/512

(54) **Hydraulic damper for a vehicle steering system**

(30) Priority: 18.08.2010 BR 10028064
(71) Applicant: Magneti Marelli Cofap Companhia Fabricadora de Peças, 09110-901 Sao Paulo (BR)
(72) Inventor: Caravieri de Abreu, Guilherme, Sao Paulo (BR); Nelo Vannucci, Sérgio, Sao Jose' dos Campos (BR)
(74) Representative: Bongiovanni, Simone

(57) **Abstract**

The damper comprises: a pressure tube (10) divided, by a piston (20), into a compression chamber (CC) and a traction chamber (CT) which communicate with each other through the piston (20); a rod (30) having an end (31) retained to the piston (20) and an opposite end (32) external to the pressure tube (10); a reservoir tube (40) external to the pressure tube (10) and defining therewith a hydraulic fluid reservoir (R) in a controlled fluid communication with the compression chamber (CC); a fluid communication (F) between the traction chamber (CT) and the reservoir (R); and a control valve (V) mounted in the fluid communication (F), for releasing and blocking the latter as a function of the pressure level of the hydraulic fluid in the traction chamber (CT).

## Description

### Field of the Invention

The present invention refers to a hydraulic damper of the type used in steering systems of wheeled motor vehicles, for absorbing, at least in part, the vibrations generated by the driving surface, on which the vehicle is traveling, which vibrations would be otherwise transmitted to the steering wheel and to other mechanisms of the vehicle steering system.

### Background of the Invention

The road motor vehicles to transport people or goods have steering systems which connect the directional wheels to a steering wheel of the vehicle, by means of adequate connection mechanisms and articulations.

In the current state of the art, most wheeled motor vehicles use, in their steering systems, hydraulic vibration dampers, generally of the telescopic type, for the purpose of eliminating, or at least reducing, the vibrations generated by the driving surface on which the vehicle is traveling and which are transmitted, by the connection mechanisms and by the articulations of the system, to the steering wheel or to the assistive device, if provided.

These known hydraulic dampers present damping forces (damping factors) that are predefined during manufacture for reducing the vibrations, generally of low amplitude and high frequency, induced on the steering wheel or on the assistive device (if existent) by the irregularities of the driving surface on which the vehicle is traveling.

However, these known hydraulic dampers produce, as a function of the rotation speed imparted by the vehicle driver to the steering wheel, damping forces with resistance characteristics which do not comply with the requirements of the servo-assisted steering systems in modern vehicles.

In the current state of the art, the damping forces produced by the damper increase proportionally with the increase of the rotation speed imparted by the vehicle driver to the steering wheel.

Thus, although reducing the vibrations transmitted to the steering system by the irregularities of the surface on which the vehicle travels, these known hydraulic dampers for steering systems do not produce damping forces capable of facilitating the directional control of the vehicle, by limiting the sudden and quick movements of the steering wheel, or preventing or at least reducing the overloads in the components of a servo-assisted steering system. Nevertheless, in these known bi-tubular hydraulic dampers, the damping force (damping factor), in the compression and traction movements, is defined by the dimensioning of traction and compression control valves, which are provided to adjust the hydraulic fluid flow (viscous fluid) between the traction and compression chambers, upon operation of the damper, when the steering system is submitted to the vibrations caused by operation of the vehicle and to the rotation movements of the steering wheel.

Said traction and compression control valves are dimensioned to provide a predetermined damping force to the passage of the hydraulic fluid flow, when the latter is impelled by low-amplitude and high-frequency oscillations of the piston (vibrations in the steering system), said oscillations occurring upon the usual traveling of the vehicle on surfaces on which the vehicles operate.

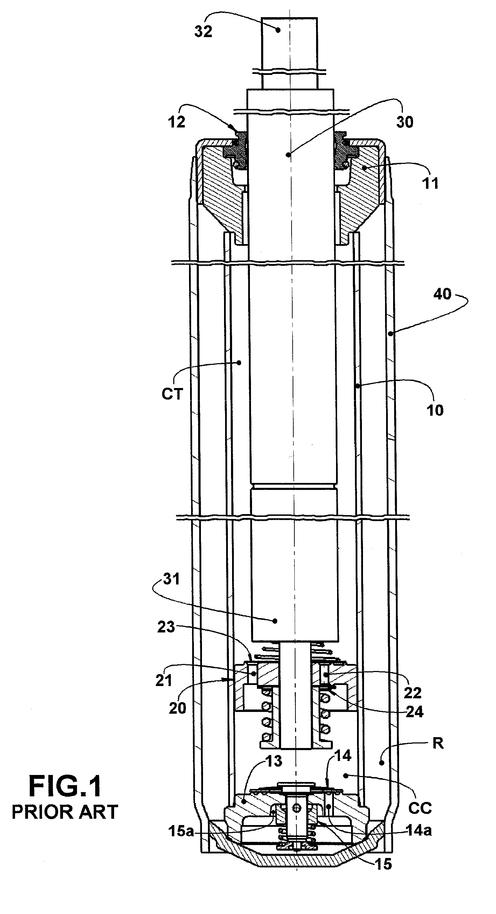

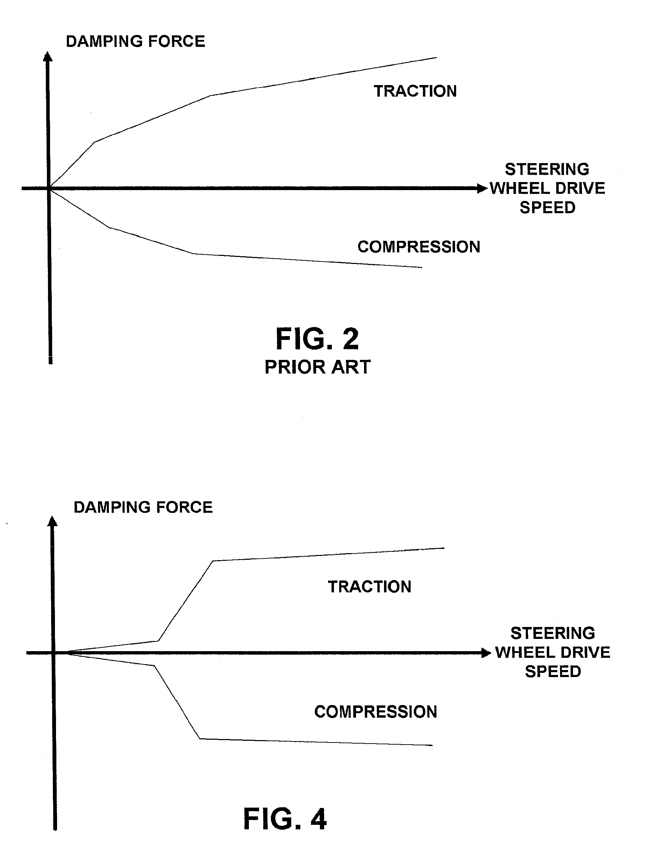

Said dimensioning of the traction and compression valves causes the damping force produced by the damper illustrated in figure 1, both during traction and during compression, to increase continuously and directly proportionally to the increase of the rotation speed imparted by the driver to the steering wheel, as illustrated in figure 2 of the enclosed drawings.

Thus, as already previously mentioned, these known hydraulic dampers for steering systems do not produce damping forces capable of guaranteeing the directional control of the vehicle or preventing overloads in the components of a servo-assisted steering system, upon the sudden and quick movements of the steering wheel, allowing said movements to be transmitted to the whole steering system.

The dimensioning of the traction and compression control valves provided in the damper is made so as to provide the damping of the high-frequency and low-amplitude vibrations, but it is inefficient to provide an effective damping force at the initial phases of a sudden and quick rotation of the steering wheel, that is, upon an angular oscillation of the steering wheel in low frequency, high amplitude and high speed.

### Summary of the Invention

As a function of the deficiencies of the known hydraulic dampers for steering systems, of the telescopic and bi-tubular type, the present invention has the object of providing a damper of the type considered herein and which, by using a simple construction at a relatively reduced cost, is capable of absorbing, at least in part, the vibrations generated by the surface on which the vehicle is traveling, which vibrations would otherwise be transmitted to the vehicle steering system, as well as producing damping forces capable of guaranteeing the directional control of the vehicle or preventing overloads in the components of a steering system, generally of the servo-assisted type, upon sudden and quick movements of the steering wheel.

In a more specific manner, the present invention has the object of providing a damper such as mentioned above and which, besides absorbing the vibrations generated by the vehicle displacement, produces a damping force presenting a substantially constant and predetermined value, whenever the steering wheel is forced to rotate at a speed superior to a value considered harmful to the directional control of the vehicle or to its servo-assisted steering system.

The hydraulic damper for vehicle steering systems object of the present invention is of the type which comprises: a pressure tube; a piston dividing the pressure tube into a compression chamber and a traction chamber and carrying traction and compression control valves to communicate said chambers with each other; a rod having an end internal to the traction chamber and attached to the piston, and an opposite end external to the pressure tube; a reservoir tube external to the pressure tube and defining therewith a hydraulic fluid reservoir; a valve plate closing the end of the pressure tube which coincides with the end of the compression chamber and allowing a controlled fluid communication between the latter and the reservoir. According to the invention, the damper further comprises: a fluid communication between the traction chamber and the reservoir; and a control valve provided in said fluid communication and displaceable between an open position, releasing said fluid communication, while the pressure of the hydraulic fluid in the traction chamber remains inferior to a determined value, and a closed position, blocking said fluid communication, when the pressure of the hydraulic fluid in the traction chamber reaches said determined value.

With the construction proposed by the invention, the traction and compression control valves can be dimensioned to produce, associated with the open condition of the new control valve, adequate damping forces to absorb also the higher-amplitude and lower-frequency oscillations which are transferred to the steering system from the road surface, without said damping forces undesirably impairing the steering wheel rotation at speeds inferior to a predetermined value considered not harmful to the directional control of the vehicle or to the steering system mechanisms. Besides, the provision of the control valve further provides, when said control valve is closed, substantially constant damping forces, when a sudden rotation movement, at speeds equal or superior to said value, is applied to the steering wheel.

The provision of the additional control valve, which senses the rotation movements of the steering wheel, allows the damper to produce null or much reduced damping forces at low rotation speeds of the steering wheel, as well as a high and practically constant damping force at rotation speeds equal or higher than a predetermined value considered not harmful to the directional control of the vehicle and to the steering system mechanisms.

### Brief Description of the Drawings

The invention will be described below, with reference to the enclosed drawings, given by way of example of a possible construction for the damper and in which:
Figure 1 represents a longitudinal sectional view of a bi-tubular hydraulic damper, of the type normally used in vehicle steering systems and constructed according to the prior art;
Figure 2 represents a typical graph of the damping forces produced by the prior art damper, as a function of the rotation speed imparted to the steering wheel by the vehicle driver;
Figure 3 represents a longitudinal sectional view of a bi-tubular hydraulic damper constructed according to the present invention;
Figure 4 represents a typical graph of the damping forces produced by the damper of the present invention, as a function of the rotation speed imparted to the steering wheel by the vehicle driver;
Figure 5 represents an enlarged detail view of part the damper illustrated in figure 3, with the control valve in the open position; and
Figure 6 represents an enlarged detail view similar to that of figure 5, but illustrating the control valve in the closed position.

### Description of the Invention

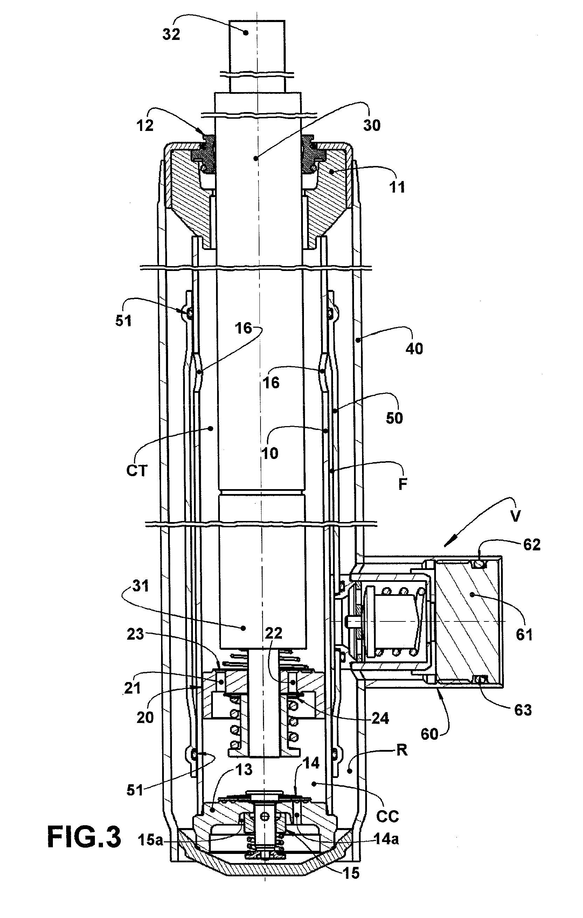

As already previously mentioned, the invention refers to double-acting hydraulic dampers, preferably bi-tubular and to be applied to steering systems for vehicles, such as cars and buses for transporting passengers, or vans and trucks for transporting goods, presenting the basic construction illustrated both in figure 1 and in figure 3 of the enclosed drawings.

The hydraulic damper of the present invention conventionally comprises, as illustrated in figures 1 and 3, a pressure tube 10 in the interior of which is mounted a piston 20 which divides the pressure tube 10 into a compression chamber CC and in a traction chamber CT, said chambers containing a hydraulic fluid, that is, a non-compressible viscous fluid.

The piston 20 is axially trespassed by a compression passage 21 and a traction passage 22.

The compression passage 21 is operatively associated with a compression control valve 23 and the traction passage 22 is operatively associated with a traction control valve 24. Said control valves may present any known construction for controlling the passage of a hydraulic fluid (viscous fluid) from one to the other of the traction chamber CT and compression chamber CC, upon movement of the piston 20 in the interior of the pressure tube 10, during the vehicle operation, and upon driving the steering wheel.

In these known hydraulic dampers, of the bi-tubular type, the end of the pressure tube 10, which is adjacent to the traction chamber CT, is closed by an annular sealing plate 11, generally associated with a seal 12, through which it is axially displaced and guided a rod 30 whose inner end 31 is attached to the piston 20. The rod 30 presents an outer end 32 provided with means (not illustrated) for its articulated coupling to the vehicle steering system, whilst the opposite end of the pressure tube 10 is provided with means (not illustrated) for its coupling to the vehicle structure.

In said damper of the bi-tubular type, the pressure tube 10 has an opposite end adjacent to the compression chamber CC, which is closed by a valve plate 13 provided with a passage 14a associated with a traction valve 14 and with a passage 15a associated with a compression valve 15.

Said traction valve 14 allows the compression chamber CC to be in controlled fluid communication with a hydraulic fluid reservoir R, during the expansion (traction) displacement of the damper.

The hydraulic fluid reservoir R is usually formed by a reservoir tube 40 positioned around the pressure tube 10 and partially filled with the hydraulic fluid (non-compressible viscous fluid) and complemented with a compressible gas which, when compressed, compensates the volume occupied by the rod 30 in the interior of the traction chamber CT, during the expansion movement of the damper. The reservoir tube 40 has its ends sealed to consolidate the structure of the bi-tubular damper.

The damper considered herein produces, during the telescopic movement of the rod 30 in the traction movement, a resistance and damping force by the forced passage of the hydraulic fluid through the traction valve 24 of the piston 20, maintaining a pressure in the traction chamber CT as a function of the drive speed in the damper traction movement.

The increased volume in the compression chamber CC caused by the traction displacement of the rod 30, is filled, in the compression chamber CC, by drawing the hydraulic fluid contained in the reservoir R, through the traction valve 14 of the valve plate 13.

During the telescopic movement of the rod 30 in the compression movement, the damper promotes a resistance and damping force, partially by the forced passage of the hydraulic fluid through the compression control valve 23 in the piston 20, from the compression chamber CC to the traction chamber CT and, mainly, by the forced passage of the hydraulic fluid through the compression valve 15, from the compression chamber CC to the reservoir R, maintaining the pressure in the traction chamber CT.

The volume of hydraulic fluid which passes through the compression valve 15 is equal to the volume displaced by the rod 30 during the compression movement of the damper. Thus, the damper promotes a positive pressure in the traction chamber CT, both in the traction movement condition and in the compression movement condition of the damper, generating a resistant damping force, predefined at the construction of the damper and as a function of the damper drive speed, by the traction control valve 24 of the piston 20, in the traction movement and, mainly, by the compression valve 15 in the compression movement. These resistance and damping forces applied to the movement of the assembly formed by the rod 30 and piston 20 are predefined in the construction of the damper.

In the current state of the art, the oscillatory movement of the steering system is submitted to a typical damping force, as a function of the drive speed of the steering wheel, as illustrated in figure 2. There may be noted that the damping force, in these known dampers for steering systems, is always increasing, from zero drive speed of the steering wheel.

The present invention has the object of obtaining null damping forces, or at least very small ones, from reduced drive speeds to a certain value of drive speed from which the damping forces are strong and essentially constant, as can be seen in figure 3.

In order to attain said object, the present invention, as illustrated in figures 3, 5 and 6, provides a fluid communication F between the traction chamber CT and the reservoir R, said fluid communication F being blocked by a control valve V, which is automatically displaced between an open position, releasing said fluid communication F, while the pressure of the hydraulic fluid in the traction chamber CT remains inferior to a determined value, and a closed position, in which said fluid communication F is blocked, when the pressure of the hydraulic fluid in the traction chamber CT reaches said determined valor.

In the illustrated constructive form, the fluid communication F is defined by the annular space formed between the pressure tube 10 and a third tube 50, surrounding the pressure tube 10 and having its ends hermetically seated and retained against the latter and each carrying an annular sealing means 51, in elastomer or in any other adequate material, to be compressed against the pressure tube 10.

The third tube 50 is longitudinally extended through the interior of the reservoir R and opened to the interior of the traction chamber CT by one or more radial windows 16 provided in the pressure tube 10.

The controlled connection of the fluid communication F with the reservoir R is obtained through a radial opening 52 of the third tube 50 and a larger radial opening 41 of the reservoir tube 40, generally coaxial to the radial opening 52 of the third tube 50. In these openings there is mounted the control valve V.

The control valve V of the present invention, as illustrated in figures 3, 5 and 6, comprises a tubular casing 60 affixed, for example by welding, to the reservoir tube 40 and projecting radially outwards from the latter, in continuation to the radial opening 41, to which interior said tubular casing 60 is opened. The tubular casing 60 has its free end hermetically closed by a cover 61 provided with an outer thread 61a to be coupled to an inner thread 60a of the tubular casing 60. The tightness of the cover 61 is also ensured by at least one sealing ring 62 housed in a peripheral channel 63 of the cover 61 and which actuates against a non-threaded inner wall extension of the tubular casing 60. It should be understood that the axial retention of the cover 61 may be obtained by other means, such as welding, gluing, double-seaming, etc.

The control valve V further comprises a connection plate 70, having a tubular neck 71 fitted in the radial opening 52 of the third tube 50 and an annular flange 72 seated against the third tube 50 and provided with a circumferential groove 72a which houses a sealing ring 73 to be compressed against the third tube 50, upon the mounting of the connection plate 70 which may be simply seated and axially pressed against the third tube 50, by the cover 61, as described ahead, or also affixed, by any adequate means and in a definitive manner, for example by welding, to the third tube 50.

The annular flange 72 further defines a peripheral cradle 72b onto which is seated and retained, by any adequate means, an open end 81 of a tubular cup 80 with the opposite end closed by an annular wall 82 provided with a central opening 83 which defines the seat S of the control valve V. The tubular cup 80 presents a contour inferior to that of the tubular casing 60, so as to define therewith an annular passage 84 which is open to the interior of the reservoir R, through the larger radial opening 41 of the reservoir tube 40.

In the illustrated construction, the tubular cup 80 is axially pressed against the connection plate 70, by the cover 61 seating against a spacer 65 positioned between the cover 61 and the annular wall 82 of the tubular cup 80 and configured to provide hydraulic fluid radial passages between the cover 61 and the tubular cup 80.

Thus, the annular wall 82 of the tubular cup 80 is maintained spaced from the cover 61, through the spacer 65, so as to define, therebetween, at least one radial hydraulic fluid passage, which extends up to the annular passage 84, to communicate the seat S with the interior of the reservoir R.

In the interior of the tubular cup 80 and seated against the annular flange 72 of the connection plate 70 there is mounted a passage plate 90, provided with a plurality of eccentric holes 91 and one central hole 92, in which interior is guided an axial pin 101 incorporated in an end of a plunger 100, whose opposite end defines a preferably conical sealing surface 102 which, when seated against the seat S, closes the control valve.

The plunger 100 further incorporates a peripheral shoulder 103 against which is seated an end of a spring 105, whose opposite end is seated against the annular wall 82 of the tubular cup 80. Thus, the plunger 100 is constantly forced to the open position of control valve V, with its sealing surface 102 being spaced from the seat S.

With this construction, when the damper is submitted to an expansion movement, caused by a steering wheel rotation at a reduced speed, even if in a high amplitude, the hydraulic fluid contained in the traction chamber CT is pumped, by the piston 20 of the damper and through the radial windows 16, to the interior of the fluid communication F defined between the third tube 50 and the pressure tube 10. In this operational condition, the pressure of the hydraulic fluid in the interior of the traction chamber CT and of the fluid communication F is not sufficient to provoke, in the interior of the tubular cup 80 of the control valve V, a flow capable of displacing the plunger 100 against the force of the spring 105, maintaining the control valve in the open position, in which it releases the fluid communication F, allowing the hydraulic fluid to flow from the traction chamber CT to the reservoir R.

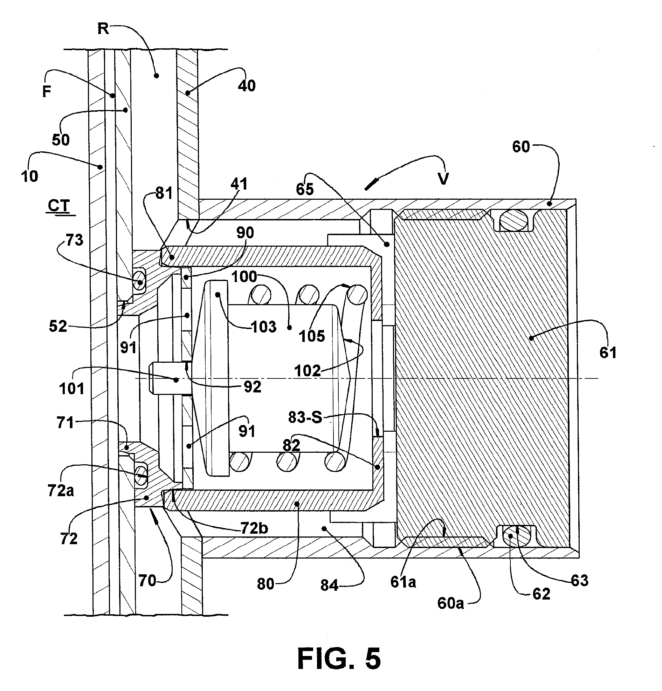

In said operational conditions of the steering wheel rotation, in the compression direction of the damper, the hydraulic fluid contained in the compression chamber CC is transferred to the traction chamber CT, through the small restriction of the compression control valve 23 of the piston 20, and pumped by the latter from the interior of the traction chamber CT to the interior of the fluid communication F, through the radial windows 16. Further in this operational condition of steering wheel rotation at reduced speed, the pressure of the hydraulic fluid in the interior of the compression chamber CC and traction chamber CT is not sufficient to generate, in the interior of the tubular cup 80, a hydraulic fluid flow capable of displacing the plunger 100 against the force of the spring 105. The plunger 100 is thus maintained spaced from the seat S, by the force of the spring 105, allowing the hydraulic fluid to freely pass through the seat S and towards the interior of the reservoir R, as illustrated in figure 5.

In these reduced-speed conditions of the steering wheel rotation, the damper produces null or much reduced damping forces, which complies with the objects of the present invention.

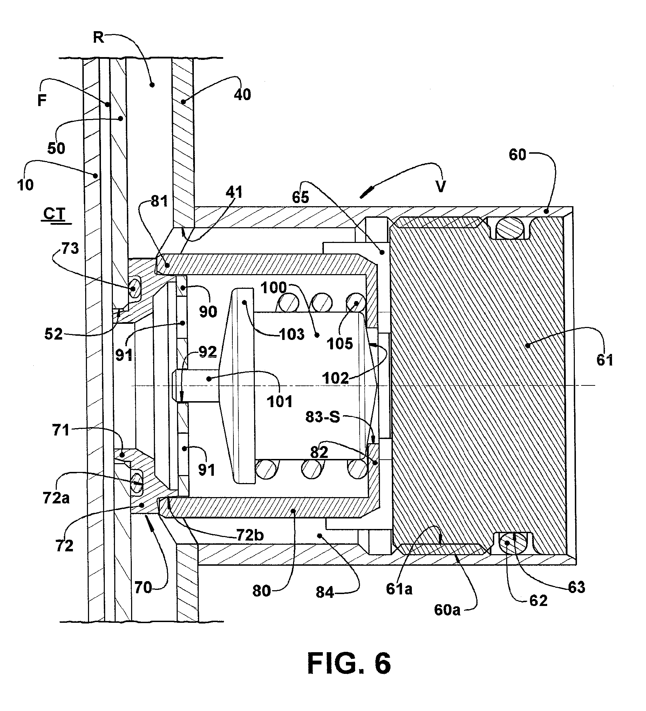

In a different way, when the damper is submitted to a expansion movement (traction), caused by a steering wheel rotation at a speed considered high and harmful to the steering system, part of the hydraulic fluid contained in the traction chamber CT is pumped, by the piston 20 of the damper and through the radial windows 16, to the interior of the fluid communication F defined between the third tube 50 and the pressure tube 10. In this operational condition in which the steering wheel rotates at high speeds, the pressure of the hydraulic fluid in the interior of the traction chamber CT and of the fluid communication F is sufficient to provoke, in the interior of the tubular cup 80 of the control valve V, a flow capable of displacing the plunger 100 against the force of the spring 105, leading the control valve to the closed position, in which it blocks the fluid communication F, preventing the hydraulic fluid from flowing from the traction chamber CT to the reservoir R, as illustrated in figure 6. In this condition, the traction damping force is defined by the traction control valve 24 of the piston 20, presenting a substantially constant value for the steering wheel rotation speeds equal or higher than a determined safe value.

In said operational conditions of high rotation speed of the steering wheel, in the compression direction of the damper, the hydraulic fluid contained in the compression chamber CC is transferred to the traction chamber CT, through the small restriction of the compression control valve 23 of the piston 20, and pumped by the latter from the interior of the traction chamber CT to the interior of the fluid communication F, through the radial windows 16. Further in this operational condition of steering wheel rotation at high speeds, the pressure of the hydraulic fluid in the interior of both the compression chamber CC and the traction chamber CT is sufficient to generate, in the interior of the tubular cup 80, a hydraulic fluid flow capable of displacing the plunger 100 against the force of the spring 105. Then, the plunger 100 has its sealing surface 102, seated against the seat S, closing the central opening 83 of the tubular cup 80 and blocking the passage of the hydraulic fluid through the seat S and towards the interior of the reservoir R (see figure 6).

In this condition, the compression damping force is defined, partially by the compression control valve 23 of the piston 20 and, mainly, by the compression valve 15, in order to present a substantially constant value for the steering wheel rotation speeds equal or higher than a determined safe value, which complies with the objects of the present invention.

With the preferred construction described herein, the present invention achieves the purpose of obtaining damping forces as a function of the rotation speed of the steering wheel, as shown in the graph of figure 3. Although only one embodiment of the invention has been illustrated herein, it should be understood that alterations can be made in the form and arrangement of the component parts, without departing from the inventive concept defined in the claims which accompany the present specification.

## Claims

1. A hydraulic damper for a vehicle steering system, comprising: a pressure tube (10); a piston (20) dividing the pressure tube (10) into a compression chamber (CC) and a traction chamber (CT) and carrying a traction control valve (24) and a compression control valve (23) to communicate said chambers with each other; a rod (30) having an end (31), internal to the traction chamber (CT) and attached to the piston (20), and an opposite end (32) external to the pressure tube (10); a reservoir tube (40) external to the pressure tube (10) and defining therewith a hydraulic fluid reservoir (R); a valve plate (13) closing the end of the pressure tube (10) which coincides with the end of the compression chamber (CC) and allowing a controlled fluid communication between the latter and the reservoir (R), the damper being **characterized in that** it further comprises: a fluid communication (F) between the traction chamber (CT) and the reservoir (R); and a control valve (V) mounted in said fluid communication (F) and displaceable between an open position, releasing said fluid communication (F), while the pressure of the hydraulic fluid in the traction chamber (CT) remains inferior to a determined value, and a closed position, blocking said fluid communication (F), when the pressure of the hydraulic fluid in the traction chamber (CT) reaches said determined value.

2. The damper, As set forth in claim 1, **characterized in that** the fluid communication (F) is defined by an annular space formed between the pressure tube (10) and a third tube (50), surrounding the pressure tube (10) and having opposite ends hermetically seated and retained against the latter, said annular space being opened to the interior of the traction chamber (CT) by at least one radial window (16) provided in the pressure tube (10) and the control valve being mounted to the third tube (50) and to the reservoir tube (40), so as to selectively communicate, the annular space, which is internal to the third tube (50), with the interior of the reservoir (R).

3. The damper, as set forth in claim 2, **characterized in that** the third tube (50) presents each of its opposite ends carrying an annular sealing means (51) compressed against the pressure tube (10).

4. The damper, as set forth in any of claims 2 or 3, **characterized in that** the third tube (50) is longitudinally extended through the interior of the reservoir (R) and presents a radial opening (52) coaxial to a larger radial opening (41) provided in the reservoir tube (40), the control valve (V) being mounted in said radial openings (52,41).

5. The damper, as set forth in claim 4, **characterized in that** the control valve (V) comprises: a tubular casing (60) affixed to the reservoir tube (40) and projecting radially outwards from the latter in continuation to the larger radial opening (41) and having a closed free end; a tubular cup (80) internal to the tubular casing (60) and having an end (81) that is seated and hermetically retained against the third tube (50), in the region of its radial opening (52), and an opposite end closed by an annular wall (82) with a central opening (83) defining a seat (S) of the control valve (V), which maintains fluid communication with the reservoir (R) through the interior of the tubular casing (60); and a plunger (100) mounted in the interior of the tubular cup (80) and displaceable from an open valve position, in which it is maintained spaced from the seat (S), to a closed valve position, in which it is seated against the seat (S), blocking the central opening (83) of the tubular cup (80).

6. The damper, as set forth in claim 5, **characterized in that** the free end of the tubular casing (60) is hermetically closed by a cover (61) axially retained in the interior of said tubular casing (60) and housing, in a peripheral channel (63), a sealing ring (62) which actuates against the tubular casing (60).

7. The damper, as set forth in any of claims 5 or 6, **characterized in that** the control valve (V) further comprises a connection plate (70), having a tubular neck (71) fitted and retained in the radial opening (52) of the third tube (50), and an annular flange (72) hermetically seated against the third tube (50) and defining a peripheral cradle (72b) onto which is seated and retained the end (81) of the tubular cup (80).

8. The damper, as set forth in claim 7, **characterized in that** the annular flange (72) of the connection plate (70) is provided with a circumferential groove (72a) which houses a sealing ring (73) to be compressed against the third tube (50).

9. The damper, as set forth in any of claims 7 or 8, **characterized in that** the tubular cup (80) presents a contour inferior to that of the tubular casing (60), to define therewith an annular passage (84) which is opened to the interior of the reservoir (R), through the larger radial opening (41) of the reservoir tube (40).

10. The damper, as set forth in any of claims 5 to 9, **characterized in that** the control valve further comprises a passage plate (90), mounted in the interior of the tubular cup (80) and seated against the annular flange (72) of the connection plate (70) and provided with a plurality of eccentric holes (91) and a central hole (92) in which interior is guided an axial pin (101) incorporated in an end of the plunger (100), whose opposite end defines a sealing surface (102) which, when seated against the seat (S), closes the control valve.

11. The damper, as set forth in claim 10, **characterized in that** the plunger (100) incorporates a peripheral shoulder (103) against which is seated an end of the spring (105), whose opposite end is seated against the annular wall (81) of the tubular cup (80).
